# EUROPÄISCHE PATENTSCHRIFT

(11) **EP 3 285 960 B1**
(45) Veröffentlichungstag und Bekanntmachung des Hinweises auf die Patenterteilung: **12.01.2022**
(21) Anmeldenummer: 16724279.1
(22) Anmeldetag: 18.04.2016
(51) Int. Cl.: B23Q 11/08, B23Q 17/20, B23B 25/06

(54) **MESSEINRICHTUNG FÜR EINE WERKZEUGMASCHINE UND ENTSPRECHENDE WERKZEUGMASCHINE**
MEASUREMENT DEVICE FOR A MACHINE TOOL AND CORRESPONDING MACHINE TOOL
DISPOSITIF DE MESURE DESTINÉ À UNE MACHINE-OUTIL ET MACHINE-OUTIL CORRESPONDANTE

(30) Priorität: 20.04.2015 DE 102015207108
(43) Veröffentlichungstag der Anmeldung: 28.02.2018
(73) Patentinhaber: Schaeffler Technologies AG & Co. KG, 91074 Herzogenaurach (DE)
(72) Erfinder: DAUT, Klaus, 91074 Herzogenaurach (DE)
(86) Internationale Anmeldenummer: PCT/DE2016/200189
(87) Internationale Veröffentlichungsnummer: WO 2016/169563

(56) Entgegenhaltungen:
- EP-A1- 2 062 686
- WO-A1-02/054009
- DD-A1- 250 080
- JP-A- H04 105 851
- US-A- 4 576 069

## Beschreibung

Die Erfindung betrifft eine Messeinrichtung für eine einen Werkzeugantrieb aufweisende Werkzeugmaschine, wobei die Messeinrichtung einen Messtaster oder einen anderen Messkopf aufweist. Die Erfindung betrifft weiterhin eine Werkzeugmaschine mit einem Werkzeugantrieb für ein Werkzeug und mit einer derartigen Messeinrichtung.

Eine derartige Messeinrichtung und eine derartige Werkzeugmaschine sind bekannt. Als Beispiel für eine derartige Messeinrichtung seien hier beispielhaft die Messeinrichtungen MIDA^{™} der Baureihe T der Firma Mapross genannt. Diese Messeinrichtungen sind für Werkzeugmaschinen wie Bearbeitungszentren, Drehmaschinen und Fräsmaschinen geeignet. Derartige Messeinrichtungen für Werkzeugmaschinen werden am Werkzeugrevolver dieser Werkzeugmaschinen auf einem freien Werkzeugplatz befestigt. Die Messköpfe dieser Messeinrichtungen arbeiten zumeist optisch, über Funk oder über Infrarot und senden ihre Signale direkt beim Messvorgang. Nachteilig bei solchen Messeinrichtungen ist jedoch, dass das hochempfindliche Messequipment ihrer Messköpfe vor den umherfliegenden Spänen, Kühlmittel und sonstigen Medien innerhalb der Werkzeugmaschine ungeschützt sind.

Die DD 250 080 A1 offenbart eine Abdeckung für einen Messtaster, die in mit einem Kühlschmiermittel versorgbaren Mehrfachwerkzeugträger von Werkzeugmaschinen einsetzbar ist.

Es ist die Aufgabe der Erfindung eine Messeinrichtung und eine entsprechende Werkzeugmaschine anzugeben, die die genannten Schwierigkeiten überwinden.

Die Lösung der Aufgabe erfolgt erfindungsgemäß durch die Merkmale der unabhängigen Ansprüche. Bevorzugte Ausgestaltungen der Erfindung sind in den Unteransprüchen angegeben, die jeweils einzeln oder in Kombination einen Aspekt der Erfindung darstellen können.

Bei der erfindungsgemäßen Messeinrichtung ist vorgesehen, dass diese eine verschieblich gelagerte Schutzabdeckung aufweist, die von dem Werkzeugantrieb angetrieben derart verlagerbar ist, dass diese Schutzabdeckung den Messkopf wahlweise abdeckt oder zum Messen freigibt. Die Schutzabdeckung kann also vom Werkzeugantrieb der Werkzeugmaschine über den Messkopf vor- und zurückverlagert werden. Die Werkzeugmaschine weist in der Regel einen Platz oder mehrere Plätze zur Befestigung von Werkzeugen auf. Die entsprechenden Werkzeuge sind zumeist spanabhebende Werkzeuge wie etwa Fräser einer Fräsmaschine. Die Werkzeugmaschine weist in einer bevorzugten Ausgestaltung einen Werkzeugrevolver mit mehreren Plätzen zur Befestigung von Werkzeugen auf, über die diese Werkzeuge vom Werkzeugantrieb betätigbar sind. Anstelle eines Werkzeugs kann dabei auch die genannte Messeinrichtung an einem dieser Plätze befestigt werden.

Zum Beginn des Messzyklus wird der Werkzeugantrieb eingeschaltet und die Schutzabdeckung so verlagert, dass sie den Messkopf zum Messen freigibt. Dann beginnt die Messung mit dem Messkopf und nach der Messung wird die Drehrichtung des Werkzeugantriebs umgekehrt, so dass die Schutzabdeckung in entgegengesetzte Richtung verlagert wird, bis sie den Messkopf wieder abdeckt. Anschließend schwenkt der Werkzeugrevolver das Bearbeitungswerkzeug in Bearbeitungsstellung und die Werkstückbearbeitung beginnt erneut. Der Messkopf ist dabei durch die Schutzabdeckung vor umherfliegenden Spänen und dergleichen geschützt.

Mit Vorteil ist dabei die Schutzabdeckung als eine Schutzhülse ausgestaltet. Die Schutzhülse schützt den Messkopf bezüglich einer Längsachse der Hülse in der Regel vollumfänglich.

Erfindungsgemäß weist die Messeinrichtung einen Endanschlag für die abdeckende Position und/oder einen Endanschlag für die das Messen freigebende Position auf.

Erfindungsgemäß weist die Messeinrichtung weiterhin ein Getriebe mit zumindest einer Gewindespindel und zumindest einer mit der Gewindespindel in Eingriff stehenden Eingriffstruktur auf, wobei die Schutzabdeckung von dem Werkzeugantrieb über dieses Getriebe verlagerbar ist.

Die Eingriffstruktur ist insbesondere eine Verzahnung, die mit der Gewindespindel kämmt. Alternativ kann die Eingriffstruktur jedoch auch einfach nur als eine einfache Nut, ein einfacher Steg, etc. ausgebildet sein. wird. Auf diese Weise wird die Drehbewegung des Werkzeugantriebs in besonders einfacher Weise in die meist lineare Bewegung der Schutzabdeckung gewandelt. Die Eingriffstruktur ist in einer bevorzugten Bauform Teil des Endanschlags beziehungsweise der Endanschläge.

Dabei ist mit Vorteil vorgesehen, dass die Schutzabdeckung die zumindest eine Eingriffstruktur aufweist. Auf diese Weise ergibt sich ein besonders einfaches und effektives Getriebe.

Gemäß einer weiteren bevorzugten Ausgestaltung der Erfindung weist die Messeinrichtung eine Halterung auf, über den die Messeinrichtung in oder an einer Werkzeugaufnahme der Werkzeugmaschine befestigbar ist. Die Halterung ist Kompatibel zu den Plätzen der Werkzeugmaschine.

Mit Vorteil ist dabei vorgesehen, dass in der Halterung eine bis an das Getriebe heranreichende Ausnehmung ausgebildet ist, die ein Hindurchreichen des Werkzeugantriebs durch die Halterung bis zu einem Getriebeeingang des Getriebes ermöglicht.

Gemäß einer bevorzugten Ausführungsform der Erfindung ist der Messkopf als Messtaster mit einem Tastarm ausgebildet. Messeinrichtungen mit Messtaster finden bei Werkzeugmaschinen häufig Anwendung.

Gemäß einer weiteren bevorzugten Ausführungsform der Erfindung weist die Halterung außenumfänglich eine Verzahnungsstruktur zur formschlüssigen Befestigung an/in einem für ein Werkzeug vorgesehenen Platz der Werkzeugmaschine auf.

Gemäß noch einer weiteren bevorzugten Ausführungsform der Erfindung ist vorgesehen, dass die Messeinrichtung eine Längsachse aufweist, entlang der die Bereiche Halterung, Getriebe und Messkopf hintereinander angeordnet sind.

Die Erfindung betrifft weiterhin eine Werkzeugmaschine mit einem Werkzeugantrieb und einer vorstehend genannten Messeinrichtung. Der Werkzeugantrieb weist bevorzugt eine Überlastkupplung auf. Gemäß einer bevorzugten Ausführungsform der Erfindung weist die Werkzeugmaschine einen Werkzeugrevolver mit mehreren Plätzen für Werkzeuge auf.

Nachfolgend wird die Erfindung unter Bezugnahme auf die anliegenden Zeichnungen anhand von bevorzugten Ausführungsbeispielen exemplarisch erläutert, wobei die nachfolgend dargestellten Merkmale sowohl jeweils einzeln als auch in Kombination einen Aspekt der Erfindung darstellen können. Es zeigen:
Fig. 1: eine Messeinrichtung gemäß einer bevorzugten Ausführungsform der Erfindung in einer Schnittdarstellung,
Fig. 2: die Messeinrichtung in einer anderen Schnittdarstellung,
Fig. 3: die Messeinrichtung in einer Frontaldarstellung und
Fig. 4: die Messeinrichtung in einer Seitenansicht.

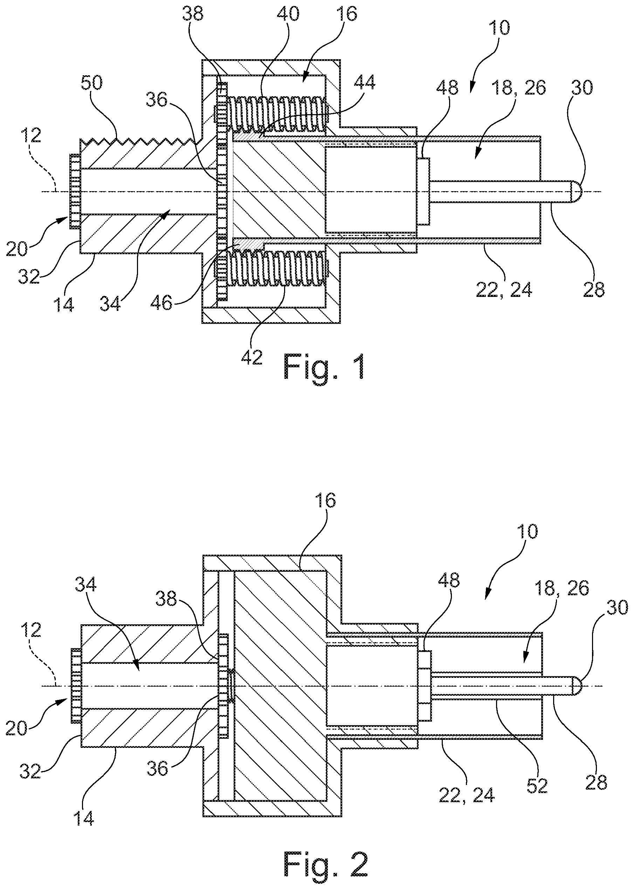

Die Fig. 1 zeigt eine Messeinrichtung 10 für eine (nicht gezeigte) Werkzeugmaschine in einer Schnittdarstellung mit einer durch die Längsachse 12 der Messeinrichtung führenden Schnittfläche. Entlang der Längsachse 12 sind eine Halterung 14, ein Getriebe 16 und ein Messkopf 18 hintereinander angeordnet. Über die Halterung 14 kann die Messeinrichtung 10 an einem für ein Werkzeug der Werkzeugmaschine vorgesehenen Platz befestigt werden. Die Werkzeugmaschine weist einen Werkzeugantrieb 20 auf, der im Normalfall das an dem Platz befestigte Werkzeug antreibt. Der Werkzeugantrieb 20 generiert im gezeigten Beispiel eine Drehbewegung als Antriebsbewegung. Die Messeinrichtung 10 weist weiterhin eine verschieblich gelagerte Schutzabdeckung 22 auf, die von dem Werkzeugantrieb 20 über das Getriebe 16 angetrieben so verlagert werden kann, dass diese Schutzabdeckung 22 den Messkopf 18 wahlweise abdeckt oder zum Messen freigibt. Die Schutzabdeckung 22 ist bevorzugt als Schutzhülse 24 ausgebildet, die linear verschoben wird, um den Messkopf 18 wahlweise abzudecken oder zum Messen freizugeben. Alternativ könnte die Schutzabdeckung 22 jedoch auch als Schutzschild ausgebildet sein. Der Messkopf 18 ist im gezeigten Beispiel als ein Messtaster 26 mit einem Tastarm 28 ausgebildet. Das freie Ende des Tastarms 28 bildet das eine Ende 30 der Messeinrichtung 10.

In der Halterung 14 ist eine von dem anderen Ende 32 der Messeinrichtung 10 bis an einen Getriebeeingang 36 des Getriebes 16 heranreichende und als Durchbruch ausgebildete Ausnehmung 34 ausgebildet ist, die ein Hindurchreichen des Werkzeugantriebs 20 durch die Halterung 14 bis zu dem Getriebeeingang 36 ermöglicht. Das Getriebe 16 weist eine Ritzel- oder Zahnradanordnung 38 mit mehreren Ritzeln/Zahnrädern, zwei Gewindespindeln 40, 42 sowie mit den Gewindespindeln 40, 42 in Eingriff stehende Eingriffstrukturen 44, 46 auf. Im gezeigten Beispiel sind diese Eingriffstrukturen 44, 46 als mit den Gewindespindeln kämmende Verzahnungen ausgebildet. Die Gewindespindeln 40, 42 sind dabei beidseits der als Hülse 24 ausgebildeten Schutzabdeckung 22 angeordnet und die Eingriffstrukturen 44, 46 sind Teile des Außenumfangs dieser Schutzabdeckung 22. Denkbar ist selbstverständlich auch eine andere Anzahl von Gewindespindeln 40, 42.

In Fig. 1 ist die Schutzabdeckung 22 in der Position gezeigt, in der sie den Messkopf 18 zum Messen freigibt. Die Eingriffstrukturen 44, 46 befinden sich an dem einen Ende der Gewindespindeln 40, 42 und bilden dort einen Endanschlag. Ist die die Schutzabdeckung 22 in der (nicht gezeigten) Position, in der sie den Messkopf 18 abdeckt, ist die Schutzabdeckung 22 entlang der Achse 12 voll ausgefahren und die Eingriffstrukturen 44, 46 befinden sich an dem anderen Ende der Gewindespindeln 40, 42 und bilden dort einen weiteren Endanschlag.

Die Messeinrichtung ist batteriebetrieben. Wenn die Batterie gewechselt oder eine Wartung am Messkopf 18 durchgeführt werden muss, wird der Messkopf 18 an der (Sechskant-)Mutter 48 (alternativ mit zwei Steckbohrungen) aus dem Rest der Messeinrichtung 10 herausgeschraubt. Der Messkopf 18 selbst ist beispielsweise mit einer Standartschnittstelle M16x1 ausgerüstet. Die hier gezeigte Halterung 14 ist als VDI 40 Werkzeughalter mit typischer Verzahnungsstruktur 50 ausgebildet. Alternativ kann die Halterung 14 jedoch auch an einen anderen Werkzeughalter (zum Beispiel Capto, BT, etc.) angelehnt sein.

Es ergibt sich folgende Funktionsweise:
Zum Beginn des Messzyklus wird der Werkzeugantrieb 20 eingeschaltet und die Schutzabdeckung 22 von dem Werkzeugantrieb 20 so lange nach hinten gezogen bis diese komplett zurück gefahren ist und die Überlastkupplung des Werkzeugantriebes 20 reagiert. Dann beginnt die Messung mit dem Messkopf 18. Nach der Messung wird die Drehrichtung des Werkzeugantriebs 20 umgekehrt und die Schutzabdeckung 22 fährt wieder nach vorne. Anschließend schwenkt der Revolver und die Bearbeitung beginnt erneut. Nun ist der Messkopf 18 - hier konkret der Messtaster 26- durch die Schutzabdeckung 22 vor den umherfliegenden Spänen gesichert.

Das vom Werkzeugantrieb 20 generierte Drehmoment wird über die Zahnradanordnung 38 (Ritzel) auf den Schneckentrieb (alternativ auch Planetenwälztrieb) mit den Gewindespindeln 40, 42 übertragen. Die Gewindespindeln 40, 42 greift in die als Verzahnungen ausgestalteten Eingriffstrukturen 44, 46 der als Hülse 24 ausgebildeten Schutzabdeckung 22 ein und ziehen die Schutzabdeckung zurück. Teil 3 dient auch als Endanschlag in beide Richtungen. Der Motor des Werkzeugantriebes wird durch überlast abgeschaltet. Alternativ dazu kann das Getriebe 16 an seinem Getriebeeingang 36 eine Rutschkupplung aufweisen.

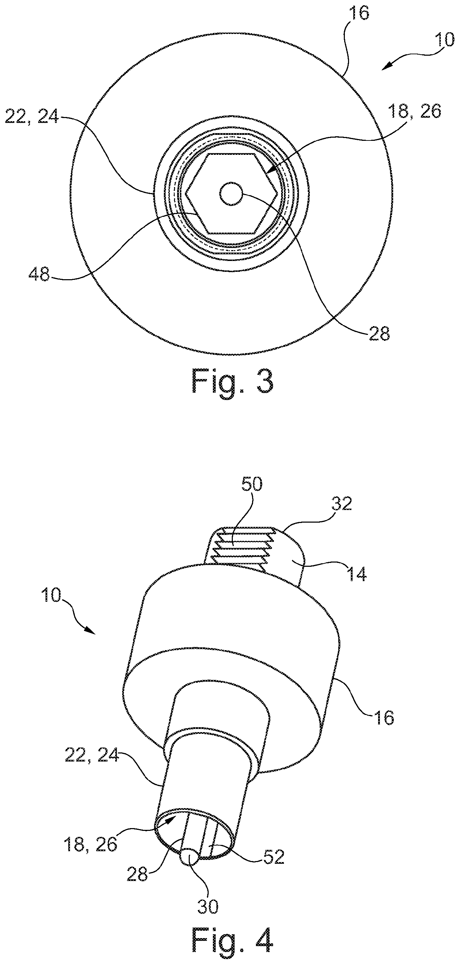

Die Fig. 2 zeigt die Messeinrichtung 10 in einer Schnittdarstellung durch die Achse 12, bei der die Schnittfläche senkrecht auf der in Fig. 1 gezeigten Schnittfläche liegt. Von dem Getriebe 16 ist im Wesentlichen nur der Getriebeeingang 36 mit der Ritzel-/Zahnradanordnung 38 erkennbar. Zusätzlich ist nun in Fig. 2 eine Führungsstruktur 52 erkennbar, durch die die Schutzabdeckung 22 linear beweglich geführt wird. Diese Struktur ist auch in Fig. 4 erkennbar. Das Vor- und Zurückverlagern der Schutzabdeckung 22 ist also in diesem Fall ein lineares Vor-und Zurückschieben entlang der Führungsstruktur 52.

Die Fig. 3 zeigt die Messeinrichtung 10 in einer Frontaldarstellung. Gut erkennbar ist der als Messtaster 26 mit dem Tastarm 28 und der Mutter 48 ausgebildete Messkopf 18. Dieser Messkopf wird -bezüglich der Achse 12- umfänglich von der als Schutzhülse 24 ausgebildeten Messabdeckung 22 umgeben. Weiterhin gut erkennbar ist der das Getriebe 16 aufnehmende Mittelteil der Messeinrichtung 10.

Die Fig. 4 zeigt schließlich die Messeinrichtung 10 in einer perspektivischen Seitenansicht. Hier ist die Ausgestaltung der Halterung 14 als VDI 40 Werkzeughalter mit der typischen Verzahnungsstruktur 50 gut erkennbar.

### Bezugszeichenliste

- 10: Messeinrichtung
- 12: Längsachse
- 14: Halterung
- 16: Getriebe
- 18: Messkopf
- 20: Werkzeugantrieb
- 22: Schutzabdeckung
- 24: Schutzhülse
- 26: Messtaster
- 28: Tastarm
- 30: Ende, eines
- 32: Ende, anderes
- 34: Ausnehmung
- 36: Getriebeeingang
- 38: Zahnradanordnung
- 40: Gewindespindel
- 42: Gewindespindel
- 44: Eingriffstruktur
- 46: Eingriffstruktur
- 48: Mutter
- 50: Verzahnungsstruktur
- 52: Führungsstruktur

## Patentansprüche

1. Messeinrichtung (10) für eine einen Werkzeugantrieb (20) aufweisende Werkzeugmaschine, wobei die Messeinrichtung (10) zur Befestigung an einem für ein Werkzeug der Werkzeugmaschine vorgesehenen Platz eingerichtet ist, wobei ein solches Werkzeug vom Werkzeugantrieb (20) betätigbar ist, wobei die Messeinrichtung (10) batteriebetrieben ist, einen Messkopf (18) und eine verschieblich gelagerte Schutzabdeckung (22) aufweist, die von dem Werkzeugantrieb (20) angetrieben derart verlagerbar ist, dass diese Schutzabdeckung (22) den Messkopf (26) wahlweise in einer abdeckenden Position abdeckt oder in einer das Messen freigebenden Position freigibt, wobei die Messeinrichtung einen Endanschlag für die abdeckende Position und/oder einen Endanschlag für die das Messen freigebende Position aufweist, und wobei die Messeinrichtung (10) **gekennzeichnet ist durch** ein Getriebe (16) mit zumindest einer Gewindespindel (40, 42) und zumindest einer mit der Gewindespindel (40, 42) in Eingriff stehende Eingriffstruktur (44, 46), über das die Schutzabdeckung (22) von dem Werkzeugantrieb (20) verlagerbar ist.

2. Messeinrichtung nach Anspruch 1 **dadurch gekennzeichnet, dass** die Schutzabdeckung (22) als Schutzhülse (24) ausgestaltet ist.

3. Messeinrichtung nach Anspruch 1 oder 2, **dadurch gekennzeichnet, dass** die Schutzabdeckung (22) die zumindest eine Eingriffstruktur (44, 46) aufweist.

4. Messeinrichtung nach einem der Ansprüche 1 bis 3, **gekennzeichnet durch** eine Halterung (14), über den die Messeinrichtung (10) in oder an einer Werkzeugaufnahme der Werkzeugmaschine befestigbar ist.

5. Messeinrichtung nach Anspruch 4, **dadurch gekennzeichnet, dass** in der Halterung (14) eine bis an das Getriebe (16) heranreichende Ausnehmung (34) ausgebildet ist, die ein Hindurchreichen des Werkzeugantriebs (20) durch die Halterung (14) bis zu einem Getriebeeingang (36) des Getriebes (16) ermöglicht.

6. Messeinrichtung nach einem der Ansprüche 1 bis 5, **dadurch gekennzeichnet,**
**dass** der Messkopf (18) als Messtaster (26) mit einem Tastarm (28) ausgebildet ist.

7. Messeinrichtung nach einem der Ansprüche 4 bis 6, **dadurch gekennzeichnet,**
**dass** die Halterung (14) außenumfänglich eine Verzahnungsstruktur (50) zur formschlüssigen Befestigung an/in einem für ein Werkzeug vorgesehenen Platz der Werkzeugmaschine aufweist.

8. Messeinrichtung nach einem der Ansprüche 4 bis 7, **dadurch gekennzeichnet,**
**dass** die Messeinrichtung (10) eine Längsachse (12) aufweist, entlang der die Bereiche Halterung (14), Getriebe (16) und Messkopf (18) hintereinander angeordnet sind.

9. Werkzeugmaschine mit einem Werkzeugantrieb und einer Messeinrichtung (10) nach einem der Ansprüche 1 bis 8.

## Claims

1. A measurement device (10) for a machine tool having a tool drive (20), wherein the measurement device (10) is configured for fastening at a site provided for the tool of the machine tool, wherein such a tool can be actuated by the tool drive (20), wherein the measurement device (10) is battery-operated, has a measurement head (18) and a displaceably mounted protective cover (22), which is driven by the tool drive (20) and can be displaced in such a way that this protective cover (22) selectively covers the measurement head (26) in a covering position or releases it in a released measurement position, wherein the measurement device has an end stop for the covering position and/or an end stop for the released measurement position, and wherein the measurement device (10) is **characterised by** a gearbox (16) with at least one threaded spindle (40, 42) and at least one engagement structure (44, 46) engaged with the threaded spindle (40, 42), via which the protective cover (22) can be displaced by the tool drive (20).

2. The measurement device according to claim 1, **characterised in that** the protective cover (22) is designed as a protective sleeve (24).

3. The measurement device according to claim 1 or 2, **characterised in that** the protective cover (22) has the at least one engagement structure (44, 46).

4. The measurement device according to one of claims 1 to 3, **characterised by** a holder (14), by means of which the measurement device (10) can be fastened in or on a chuck of the machine tool.

5. The measurement device according to claim 4, **characterised in that** a recess (34) extending as far as the gearbox (16) is formed in the holder (14), which recess allows the tool drive (20) to extend through the holder (14) as far as a gearbox input (36) of the gearbox (16).

6. The measurement device according to one of claims 1 to 5, **characterised in that** the measurement head (18) is designed as a measurement sensor (26) with a sensor arm (28).

7. The measurement device according to one of claims 4 to 6, **characterised in that** the holder (14) has a toothing structure (50) around its outer circumference for fastening at a site of the machine tool provided for a tool in a form-fitting manner.

8. The measurement device according to one of claims 4 to 7, **characterised in that** the measurement device (10) has a longitudinal axis (12), along which the holder (14), gearbox (16) and measurement head (18) regions are arranged one behind the other.

9. A machine tool with a tool drive and a measurement device (10) according to one of claims 1 to 8.

## Revendications

1. Dispositif de mesure (10) destiné à une machine-outil comportant un entraînement d'outil (20), le dispositif de mesure (10) étant conçu pour être fixé à un emplacement prévu pour un outil de la machine-outil, ledit outil pouvant être actionné par l'entraînement d'outil (20), le dispositif de mesure (10) fonctionnant sur batterie, comportant une tête de mesure (18) et un couvercle de protection (22) monté de manière mobile par coulissement qui, entraîné par l'entraînement d'outil (20), peut être déplacé de manière à ce que ce couvercle de protection (22) soit recouvre la tête de mesure (26) sélectivement dans une position de couverture, soit la libère dans une position autorisant la mesure, le dispositif de mesure comportant une butée de fin de course pour la position de couverture et/ou une butée de fin de course pour la position autorisant la mesure et le dispositif de mesure (10) étant **caractérisé par** une transmission (16) comprenant au moins une tige filetée (40, 42) et au moins une structure de mise en prise (44, 46) qui est en prise avec la tige filetée (40, 42), au moyen de laquelle le couvercle de protection (22) peut être déplacé par l'entraînement d'outil (20).

2. Dispositif de mesure selon la revendication 1, **caractérisé en ce que** le couvercle de protection (22) est conçu sous la forme d'un manchon de protection (24).

3. Dispositif de mesure selon la revendication 1 ou 2, **caractérisé en ce que** le couvercle de protection (22) comporte l'au moins une structure de mise en prise (44, 46).

4. Dispositif de mesure selon l'une quelconque des revendication 1 à 3, **caractérisé par** un support (14) au moyen duquel le dispositif de mesure (10) peut être fixé dans ou sur un porte-outil de la machine-outil.

5. Dispositif de mesure selon la revendication 4, **caractérisé en ce que** dans le support (14) est réalisé un évidement (34) s'étendant jusqu'à la transmission (16) qui permet à l'entraînement d'outil (20) de traverser le support (14) jusqu'à une entrée (36) de la transmission (16).

6. Dispositif de mesure selon l'une quelconque des revendications 1 à 5, **caractérisé en ce que** la tête de mesure (18) est conçue sous la forme d'un palpeur de mesure (26) comprenant un bras de palpeur (28).

7. Dispositif de mesure selon l'une quelconque des revendications 4 à 6, **caractérisé en ce que** le support (14) comporte une structure dentée (50) sur son pourtour extérieur pour une fixation par complémentarité de formes sur/dans un emplacement de la machine-outil prévu pour un outil.

8. Dispositif de mesure selon l'une quelconque des revendications 4 à 7, **caractérisé en ce que** le dispositif de mesure (10) comporte un axe longitudinal (12) le long duquel sont disposées les unes derrière les autres les zones du support (14), de la transmission (16) et de la tête de mesure (18).

9. Machine-outil comportant un entraînement d'outil et un dispositif de mesure (10) selon l'une quelconque des revendications 1 à 8.
